(19) Europäisches Patentamt
European Patent Office
Office européen des brevets

(11) Publication number: **0 018 086**
A1

(12) # EUROPEAN PATENT APPLICATION

(21) Application number: 80300848.1

(22) Date of filing: 19.03.80

(51) Int. Cl.³: **C 08 L 3/02,** D 21 H 1/24, D 21 H 1/38, D 21 H 3/20 // (C08L3/02, 5/00)

---

(30) Priority: **21.03.79 US 22399**

(43) Date of publication of application: **29.10.80** **Bulletin 80/22**

(84) Designated Contracting States: **AT BE CH DE FR GB IT LU NL SE**

(71) Applicant: **MERCK & CO. INC., 126, East Lincoln Avenue P.O. Box 2000, Rahway, New Jersey 07065 (US)**

(72) Inventor: **Yin, Robert I, 1275 Torrey Pines Road, La Jolla California 92037 (US)** Inventor: **Cheng, Hsiung, 4401 Yerba Santa Drive, San Diego California 92115 (US)**

(74) Representative: **Crampton, Keith John Allen et al, D YOUNG & CO 10 Staple Inn, London WC1V 7RD (GB)**

---

(54) **Process of preventing retrogradation in cooked starch and use of the obtained starch.**

(57) Xanthan gum, at levels of 0.1 to 10% and preferably 0.5–6%, and most preferably 4–6%, by weight of starch, prevents retrogradation of cooked or modified starch. The starch-xanthan gum blend can then be used in paper coating applications, such as in a size press or in a pigmented coating formulation.

.TITLE MODIFIED
see front page

TITLE OF THE INVENTION:

Use of Xanthan Gum in Cooked Starch to Prevent Retrogradation.

RELATIONSHIP TO PRIOR ART:

Cooked starch has been known for many years; it has not had wide acceptance as a high solids coating binder because its viscosity tends to increase upon aging, due to retrogradation. Temperature fluctuations of the cooked (or modified) starch paste increase retrogradation, further decreasing product applicability.

When retrogradation occurs, the paste or the coating may become too viscous to be usable. This problem has been recognized in the past, and one solution has been to add products to the starch paste to inhibit the viscosity increase. See, for instance, Welling, Leo J. and Harvey, R.D., "Viscosity Stabilizer for High Solid Thermal-Chemically Converted Starch Pastes Used as Coating Adhesives", TAPPI Coating Conference, May 17-19, 1976 BOSTON, Mass., (U.S.A)pp. 53-59. In that paper, additives such as corn oil, sulfated corn oil, sulfated oleic acid, sulfated castor oil, crude tall oil, sulfated tall oil, sulfated vegetable oleic acid, polyethylene glycol laurate, and their effect as viscosity stabilizers in cooked starch are discussed.

It has now been found that xanthan gum, when added to starch, either before or after cooking, at levels of about 0.1% to 10% by weight of starch, preferably 0.5-6%, and most preferably 4-6%, effectively prevents retrogradation. It is preferred to add the xanthan gum as a predissolved solution, but dry form combinations can also be used if sufficient care is taken in the preparation of the dry blend. The xanthan gum can also be added, dry or in solution, to the cooked starch solution after cooking.

Starch and xanthan gum have been combined in the past, but generally as components of thickener blends for various food uses (e.g., U.S. 3,721,571, relating to puddings; and U.S. 3,067,038 and U.S. 3,676,157, relating to salad dressings. A liquid laundry starch composition containing xanthan gum is also known, U.S. 3,692,552. In this latter patent, the problem of stabilizing and maintaining viscosity of granular or native uncooked laundry starch suspensions using xanthan gum is taught. The starch suspension has about 25-45% by weight starch suspending an aqueous xanthan gum solution, the latter comprising 0.1 to 3 parts by weight gum per 100 parts water. This patent is directed to the use of starch in laundry products.

0018086

By contrast, this invention relates to the use of starch and xanthan gum in paper sizing applications. The use of xanthan gum to prevent retrogradation of cooked or modified starch in paper use applications has not been heretofor described.

The starches used for paper applications are highly modified, hydroxyethyl derivatives of corn starch. Pearl corn starch could also be useful, but is not widely used currently due to retrogradation.

The method used to test control of retrogradation was to cook a 4.0% pearl corn starch in steam packet, so that granules were mostly ruptured. Different levels of a commercially available grade of xanthan gum were then added (as a predispersed aqueous solution) to the cooked starch. The mixtures were then retrograded by storage at 40°C. A Brookfield viscometer was ued to test samples at 24- and 96-hour intervals. Referring to Table I, increasing addition of xanthan gum reduced the viscosity increase of the starch on storage.

TABLE I

Brookfield Viscosity, cp,
60 r/min, No. 3 Spindle, 25°C

| Xanthan gum/ starch % [a] | Solid % | Initial | After 21 hr. [b] | After 96 hr. [b] | % Viscosity Increase 24 hr. |
|---|---|---|---|---|---|
| 100.0 (Control No. 1) | 0.4 | 400 | 440 | 440 | 0 |
| 0.0 (Control No. 2) | 4.0 | 440 | 1320 | 600[c] | 200[c] |
| 0.5 | 3.8 | 440 | 1380 | 1440[c] | 200[c] |
| 0.8 | 3.7 | 440 | 1340 | 1540 | 200 |
| 1.6 | 3.5 | 440 | 1120 | 1330 | 155 |
| 3.2 | 3.1 | 440 | 740 | 800 | 68 |
| 4.8 | 2.8 | 440 | 560 | 600 | 27 |
| 9.0 | 2.2 | 440 | 450 | 450 | 2 |

[a]The starch was cooked with steam, and its granules were swollen but not broken down.

[b]Stored at 4°C.

[c]Gelled and precipitated.

These data demonstrate that retrogradation of cooked starch is inhibited using xanthan gum in small additive amounts. Since retrograded starch is known to be poorer as a paper coating than fresh starch, this blend finds utility in paper coating technology. Xanthan gum, when added to starch, also improves the loss of film-forming and solvent holdant properties. For instance, on a standard drop test, an all-starch control paper coating at 0.3 $g/m^2$ and 0.4 $g/m^2$ coat weights, showed smaller film areas after retrogradation. By contrast, starch with 0.3 parts xanthan gum showed a slight increase in film size area at 0.3 $g/m^2$ and 0.4 $g/m^2$ coat weights.

Compositions of xanthan gum with a commercial modified starch, a hydroxyethyl derivative (commercially sold as Penford Gum 280) were also prepared and tested according to this invention.

6

CLAIMS

1        The process of preventing retrogradation in cooked or modified starch, which comprises adding 0.1 to 10% by weight xanthan gum to starch.

2        A process according to claim 1, in which 0.5 to 6% by weight xanthan gum is used.

3        A process according to claim 1 in which 4 to 6% by weight xanthan gum is used.

4        The use in paper-coating applications of a cooked or modified starch obtained by a process according to any one of claims 1 to 3.

| | **DOCUMENTS CONSIDERED TO BE RELEVANT** | | | **CLASSIFICATION OF THE APPLICATION (Int. Cl. 3)** |
|---|---|---|---|---|
| Category | Citation of document with indication, where appropriate, of relevant passages | | Relevant to claim | |
| | US - A - 3 915 728 (SAAD)<br>+ Totality +<br>-- | | 1-4 | C O8 L 3/02<br>D 21 H 1/24<br>D 21 H 1/38 |
| | DE - A - 1 940 655 (HENKEL)<br>+ Totality +<br>-- | | 1,2 | D 21 H 3/20//<br>(C O8 L 3/02,<br>C O8 L 5/00) |
| | GB - A - 1 534 626 (MERCK)<br>+ Pages 1,2 +<br>-- | | 1 | |
| | GB - A - 1 492 370 (MERCK)<br>+ Pages 1,2,3 +<br>-- | | 1 | **TECHNICAL FIELDS SEARCHED (Int.Cl. 3)**<br><br>C O8 L 3/00<br>D 21 H |
| | US - A - 3 332 795 (BLACK)<br>+ Columns 1,2 +<br>---- | | 4 | D O6 M<br>A 23 L |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>25-06-1980 | Examiner<br>HOCHHAUSER | |

EPO Form 1503.1   06.78